# EUROPEAN PATENT SPECIFICATION

(11) **EP 4 562 315 B1**
(45) Date of publication and mention of the grant of the patent: **01.04.2026**
(21) Application number: 23745209.9
(22) Date of filing: 25.07.2023
(51) Int. Cl.: F16C 17/26, F16C 19/52, F16C 19/54, F16C 27/06, F16C 33/20, F16C 41/00, F16C 17/10, F16C 21/00, G01B 7/14

(54) **SLEW BEARING WITH LOAD MONITORING**
WÄLZLAGERDREHVERBINDUNG MIT BELASTUNGSÜBERWACHUNG
PALIER DE COURONNE DE ROTATION AVEC SURVEILLANCE DE CHARGES

(30) Priority: 26.07.2022 NL 2032602
(43) Date of publication of application: 04.06.2025
(73) Proprietor: Itrec B.V., 3115 HH Schiedam (NL)
(72) Inventor: ROMEIJN, Eric, 3115 HH SCHIEDAM (NL)
(74) Representative: EP&C
(86) International application number: PCT/EP2023/070641
(87) International publication number: WO 2024/023119

(56) References cited:
- DE-A1- 102006 028 294
- DE-A1- 102018 131 195
- DE-U1- 202007 002 609
- NL-B1- 2 019 761
- US-A1- 2021 156 431

## Description

The invention relates to a slew bearing for rotatably supporting an object on a base about a slew axis. For example, the slew bearing supports a crane or a crane part. The slew bearing could also support an excavator, e.g. a backhoe dredger. The base can, for example, be embodied as a tub, a column, or a pedestal.

The invention further relates to a crane or backhoe dredger provided with the slew bearing, a vessel comprising the crane or backhoe dredger, and to a method for hoisting an object with the crane on the vessel.

For example, WO2008088213A2 describes a hoisting crane comprising a vertical column, a jib, and a jib connection member to which the jib is connected pivotably. The crane further comprises a slew bearing extending around the column and carrying the jib connection member rotatable about the column.

For example, in WO2019027325A1 the slew bearing comprises an elastically compressible resilient insert containing a plastic material, which insert is sandwiched between the rotary raceway member and the rotary ring part, so that the rotary ring part is resiliently supported on the rollers of the slew bearing via the rotary raceway member and the resilient insert.

Axial load components on the slew bearing arise from the weight of the crane or crane part, and loads applied to the crane when performing a hoisting operation. When performing a hoisting operation, not only axial load components arise, but also radial load components and momentum loads. When hoisting a load with a slewable hoisting crane, e.g. the crane of WO2008088213A2 or WO2019027325A1, the heavy load is supported by the crane offset from the center of the slew bearing and that causes the slew bearing to experience axial, radial, and momentum loads which are unevenly distributed over the slew bearing. During slewing of the crane, e.g. with the load to be lifted suspended from the crane, the load distribution on the slew bearing also moves along with the slew motion.

Systems are known to monitor load(s) acting on a slew bearing. For example, EP1528356B discloses a slew bearing and a monitoring apparatus for monitoring the slew bearing. The monitoring apparatus comprises sensors for detecting relative movements of the bearing rings with respect to each other. In particular, the tilting of the bearing rings can be monitored or determined on the basis of determined radial and axial movements. The sensors are non-contact displacement sensors which may be aligned radially and scan peripheral surfaces of the bearing rings, with the two sensors being arranged inside a bearing ring with the head of the sensors arranged in the sealed bearing gap of the slew bearing.

A downside of known slew bearings and accompanying monitoring solutions is that they are susceptible to breaking or malfunctioning during use. For example, the system of EP1528356B performs the measurements using non-contact displacement sensors provided in one bearing ring to measure through the bearing gap to the other bearing ring. In practice, the bearing gap is partly filled with oil, grease and/or other products (e.g. contaminants from outside and/or (metallic) particles due to wear) which may prevent the sensors from functioning properly. NL 2 019 761 B discloses a slew bearing according to the preamble of claims 1 and 4.

It is an object of the invention to provide an improved slew bearing. It is a further object of the invention to provide a slew bearing that allows for an improved monitoring of load on the slew bearing. It is a further object of the invention to provide an alternative slew bearing.

The invention provides a slew bearing according to claim 1.

The slew bearing is configured for rotatably supporting an object on a base about a slew axis. For example, the object is a crane or a part of a crane, e.g. a crane boom or jib.

For example, the base may be mounted on the hull of a vessel so that the slew bearing may be used to support a crane on a vessel for use in offshore operations.

The base may further be provided on the shore, e.g. on a vehicle or on the ground, for supporting a crane, via the slew bearing, for onshore operations.

The base, preferably, is a circular base having similar circular dimensions to the slew bearing.

The slew bearing, for example, may have an inner diameter of more than 5 meters, e.g. more than 10 meters, e.g. more than 15 meters, e.g. more than 20 meters.

The slew bearing comprises:
- a stationary ring part connected or connectable to the base, and
- a rotary ring part connected or connectable to the object which is rotatable around the slew axis.

The stationary ring part is configured to remain stationary relative to the base to which the stationary ring part is connected or connectable. The rotary ring part is configured to be rotatably relative to the base to which the stationary ring part is connected or connectable. Thus the rotary ring part is configured to rotate relative to the stationary ring part, for example to allow a crane, supported by the rotary ring part, to be rotatable, around the slew axis.

In practical embodiments, the rotary ring part is provided with circumferentially arranged gear teeth that can mesh with a pinion of a slew drive for slewing the rotary ring part and any object supported thereon.

Preferably, the stationary ring part and the rotary ring part are manufactured from a steel material, e.g. a CrMo alloy steel.

The raceway members are, preferably, manufactured from another metal than the rest of the stationary ring part and the rotary ring part. The raceway members may be made from a metal that is suitable for contact with the rolling elements, e.g. (cylindrical) rollers and movement relative to the rollers.

For example, the raceway members may be made from hardened steel or from the steel material commercially available under the trademark Hardox.

Rolling elements, e.g. rollers, e.g. cylindrical rollers, are provided between the stationary raceway member and the rotary raceway member to allow the rotary ring part to rotate relative to the stationary ring part and to support the rotary ring part. For example, multiple rolling elements are arranged in a cage, with multiple cages being arranged in series between the raceway members.

The slew bearing further comprises an elastically compressible resilient insert, e.g. containing a plastic material, which is sandwiched between either the rotary raceway member and the rotary ring part, so that the rotary ring part is resiliently supported on the rollers via the rotary raceway and the resilient insert, or between the stationary ring part and the stationary raceway member, so that the rotary ring part is resiliently supported on the rollers via the resilient insert and the stationary raceway.

For example, in case the resilient insert is sandwiched between the rotary raceway member and the rotary ring part, the rotary raceway member may move slightly, e.g. as a result of a load applied on the slew bearing, relative to the first rotary ring part because the resilient insert is elastically compressible. Similarly, in case the resilient insert is sandwiched between the stationary raceway member and the stationary ring part, allows the stationary raceway member to move slightly relative to the stationary ring part.

The slew bearing further comprises at least one, preferably multiple, axial load sensor(s) for monitoring axial load on the slew bearing by either measuring a distance between the rotary ring part and the rotary raceway over the resilient insert or by measuring a distance between the stationary ring part and the stationary raceway member over the resilient insert. In other words, the axial load sensor is configured for monitoring an axial load on the slew bearing by measuring the distance between the rotary ring part and the rotary raceway member through the resilient insert. In this setup, the axial load sensor does not directly measure the distance between the stationary ring part and the rotary ring part. The axial load sensor also does not come in contact with a gap between the stationary ring part and the rotary ring part, which reduces the probability of malfunctioning of the axial load sensor.

Effectively, the axial load sensor is configured to determine an axial load on the slew bearing by measuring the local compression of the resilient insert, by measuring the distance between the components of the slew bearing between which the resilient insert is sandwiched. This gives a measure of the local axial load on the slew bearing because the rotary surface and the stationary surface are perpendicular to the slew axis and the raceway member may move parallel to the direction of the slew axis when the resilient insert is compressed.

In embodiments, the axial load sensor is configured to measure the distance by measuring on the basis of an electromagnetic field, e.g. like an inductive proximity sensor, the local compression of the resilient insert, by measuring the distance between the components of the slew bearing between which the insert is sandwiched.

In other embodiments, the axial load sensor is a mechanical contact sensor extending through the insert, e.g. via a bore through the insert, and configured to measure the local compression of the resilient insert, by measuring the distance between the components of the slew bearing between which the insert is sandwiched.

In embodiments, the axial load sensor is configured to measure the distance by measuring the local compression of the resilient insert, by measuring the distance between the components of the slew bearing between which the insert is sandwiched by sending a signal through the resilient insert and receiving a reflected signal.

In embodiments, multiple axial load sensors are provided on the slew bearing to determine the axial load at multiple positions around the circumferential extension of the bearing, thus providing more information on the axial load on the slew bearing. For example, axial load sensors are arranged at regular intervals around the circumferential extension of the bearing, e.g. 10 or more sensors, e.g. more than 20 sensors, e.g. spaced between 10 and 100 centimetres apart.

By providing the axial load sensor(s) in the slew bearing according to the invention, the axial load may be determined accurately with a system that is not influenced by effects, such as dirt or grease (e.g. including metallic particles) present between the rotary ring part and the stationary ring part. Further the system is a robust system because the axial load sensor(s) is/are not in contact with the (grease filled) gap between the bearing part surfaces that are rotating with respect to each other.

In embodiments, for supporting radially directed loads between the rotary ring part and the stationary ring part, the slew bearing further comprises an elastically compressible resilient slide ring, e.g. containing a plastic material, mounted to either the rotary ring part or the stationary ring part and sliding along a second stationary surface of the stationary ring part or along a second rotary surface of the rotary ring part,
wherein the slew bearing further comprises a radial load sensor for monitoring a radial load on the slew bearing by measuring a distance between the rotary ring part and stationary ring part through the slide ring,
wherein the radial load sensor is configured to measure the distance between the rotary ring part and the stationary ring part through the slide ring based on a measurement of a field.

In embodiments, the radial load sensor is configured to measure the distance by measuring on the basis of an electromagnetic field, e.g. like an inductive proximity sensor.

The elastically compressible resilient slide ring may be mounted in the slew bearing substantially vertical, so parallel to a vertical slew axis. Movement of the rotary ring part relative to the stationary ring part, e.g. as a result of hoisting a load, may result in radial loads being applied. The elastically compressible resilient slide ring may be made from the same material as the elastically compressible resilient insert as discussed herein. When a radial load is applied the resilient slide ring is compressed due to the forces acted thereon by the rotary and stationary ring parts. By measuring the compression of the slide ring with the radial load sensor a measure of the radial load is obtained.

The invention also relates to a slew bearing according to claim 4.

For supporting radially directed loads between the rotary ring part and the stationary ring part, the slew bearing comprises an elastically compressible resilient slide ring, e.g. containing a plastic material, mounted to either the rotary ring part or the stationary ring part and sliding along a stationary surface of the stationary ring part or along a rotary surface of the rotary ring part,
wherein the slew bearing further comprises a radial load sensor for monitoring a radial load on the slew bearing by measuring a distance between the rotary ring part and stationary ring part through the slide ring,
wherein the radial load sensor is configured to measure the distance between the rotary ring part and the stationary ring part through the slide ring based on a measurement of a field.

The slew bearing may be provided with multiple radial load sensors to measure the radial load at various circumferential locations of the slew bearing.

By providing the radial load sensor according to the invention, the radial load may be determined accurately with a system that is not (unduly) influenced by outside effects, such as dirt or grease present between the rotary ring part and the stationary ring part. Further the system is a robust system because the axial load sensor does not have to be in contact with surfaces that are rotating with respect to each other.

In embodiments, the slew bearing comprises both radial and axial load sensors as discussed herein.

In embodiments, the resilient insert is sandwiched between the rotary raceway member and the rotary ring part, wherein the axial load sensor is provided in the rotary ring part, adjacent to the resilient insert, and opposite the rotary raceway member relative to the resilient insert.

This allows the axial load sensor to be provided inside a bulk of the rotary ring part, thus protecting the sensor from outside influences.

In embodiments, the slide ring is provided on the stationary ring part and the radial load sensor is provided in the rotary ring part, adjacent to the slide ring. This allows the radial load sensor to be provided inside a bulk of the rotary ring part, thus protecting the sensor from outside influences.

In embodiments the axial load sensor is configured to measure the distance by measuring the local compression of the resilient insert by measuring the distance between the components of the slew bearing between which the insert is sandwiched by sending a signal through the insert and receiving a reflected signal,

In embodiments, the radial load sensor is configured to measure the distance between the rotary ring part and the stationary ring part through the slide ring by sending a signal through the slide ring to the opposing surface and receiving a reflected signal.

In embodiments, the rolling elements are rollers, e.g. cylindrical rollers. Rollers are suitable rolling elements for a slew bearing supporting heavy loads, such as a crane. In other embodiments, the rolling elements can be balls.

In embodiments, the slew bearing comprises multiple axial load sensors for monitoring an axial load on the slew bearing by either measuring a distance between the rotary ring part and the first rotary raceway over the resilient insert or by measuring a distance between the stationary ring part and the first stationary raceway over the resilient insert, wherein the multiple axial load sensors are distributed on a circumferential extension of the slew bearing around the slew axis,
and/or wherein the slew bearing comprises multiple radial load sensors for monitoring a radial load on the slew bearing by measuring a distance between the rotary ring part and stationary ring part through the slide ring, wherein the multiple radial load sensors are distributed around the circumferential extension of the slew bearing around the slew axis. This embodiment allows to measure the axial and/or radial load around the circumferential extension of the angular slew bearing. In this way the load may be monitored around the circumferential extension of the bearing when a crane is supporting a load and rotating the load. This allows to monitor locations along the circumferential extension that experience peak loads, independent of the location of the peak load along the circumferential extension.

In embodiments, the resilient insert(s) and/or the slide ring(s) are made of a composite material, e.g. a fiber reinforced plastic material. For example, the resilient insert(s) and/or slide ring(s) may be made of Orkot (brand name).

In embodiments, the rotary ring part comprises a recess inside which the rotary raceway member is contained.

In embodiments, the stationary ring part is provided with a second stationary raceway member forming a second stationary raceway surface that is oriented substantially perpendicular to the slew axis, and wherein the rotary ring part is provided with a second rotary raceway member forming a second rotary raceway surface,
wherein rolling elements, e.g. rollers, are provided between the second stationary raceway member and the second rotary raceway member,
wherein the slew bearing further comprises a second elastically compressible resilient insert , e.g. containing a plastic material, which is sandwiched between either the second rotary raceway member and the rotary ring part, so that the rotary ring part is resiliently supported on the rollers via the second rotary raceway member and the second resilient insert, or the stationary ring part and the second stationary raceway member , so that the rotary ring part is resiliently supported on the rollers via the second resilient insert and the second stationary raceway member.

In embodiments, for supporting radially directed loads between the rotary ring part and the stationary ring part, the slew bearing further comprises a second elastically compressible resilient slide ring, e.g. containing a plastic material, mounted to either the rotary ring part or the stationary ring part and sliding along a stationary surface of the stationary ring part or along a rotary surface of the rotary ring part .

In embodiments, a fourth stationary surface is oriented substantially parallel to the slew axis and is arranged opposite a fourth rotary surface,
wherein the slew bearing further comprises a second elastically compressible resilient glide ring, e.g. containing a plastic material, which is provided either on the fourth stationary surface or on the fourth rotary surface to support radially inwards directed loads between the rotary ring part and the stationary ring part.

In embodiments, the axial load sensor is configured to measure the distance between the rotary ring part and the first rotary raceway over the resilient insert or the distance between the stationary ring part and the first stationary raceway over the resilient insert by sending a signal through the resilient insert to the opposing surface and receiving a reflected signal.

The invention is further related to a crane or backhoe dredger rotatably supported on a base by a slew bearing according to the invention.

The invention is further related to a vessel comprising a crane having an annular bearing according to the invention, wherein the vessel is configured to perform offshore hoisting operations.

The invention is further related to a method for hoisting an object on a vessel with a crane, wherein use is made of a vessel according to the invention.

In embodiments of the method, the method comprises:
- hoisting an object with the crane mounted to the vessel;
- monitoring the radial load and/or the axial load on the slew bearing with the radial load sensor and the axial load sensor; and
- optionally, providing a warning signal when the axial load and/or the radial load exceeds a predetermined threshold value.

The invention will now be illustrated with reference to the drawing, wherein:
Fig. 1 shows in cross-section a crane equipped with a slew bearing,
Fig. 2 shows in more detail a part of a first embodiment of the slew bearing;
Fig. 3 shows a cross section of a part of a second embodiment of a slew bearing; and

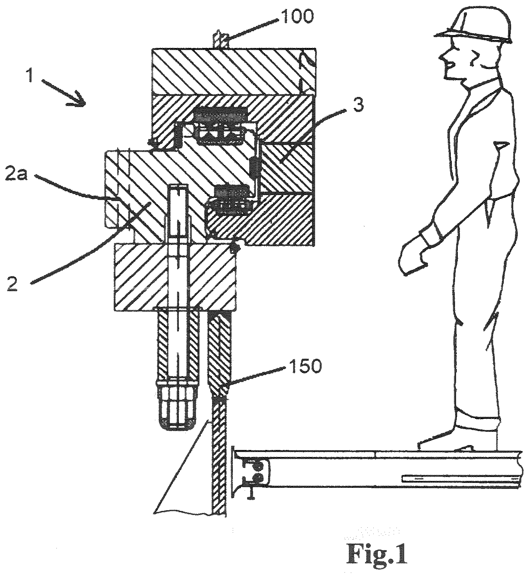

The slew bearing 1 is configured for rotatably supporting an object 100, here a slewable crane of an offshore vessel, on a base, here a crane tub 150, about a slew axis. The person shown in figure 1 is indicative for the size of the slew bearing 1 in this example. In this example, the person stands on the outside of the slew bearing 1.

The slew bearing 1 comprises a stationary ring part 2, of called nose part in the field, which is connected or connectable to the base 150, e.g. of a vessel.

The slew bearing 1 further comprises a rotary ring part 3 which is connectable or connected to a crane 100 or other object.

The crane 100, once mounted on the slew bearing 1, is rotatable around the slew axis by rotational movement of the rotary ring part 3 relative to the stationary ring part 2.

In practical embodiments, the part 2 has an internal (as shown here) or external gear section 2a formed by circumferentially arranged teeth that can mesh with a motor driven pinion to perform the slew motion.

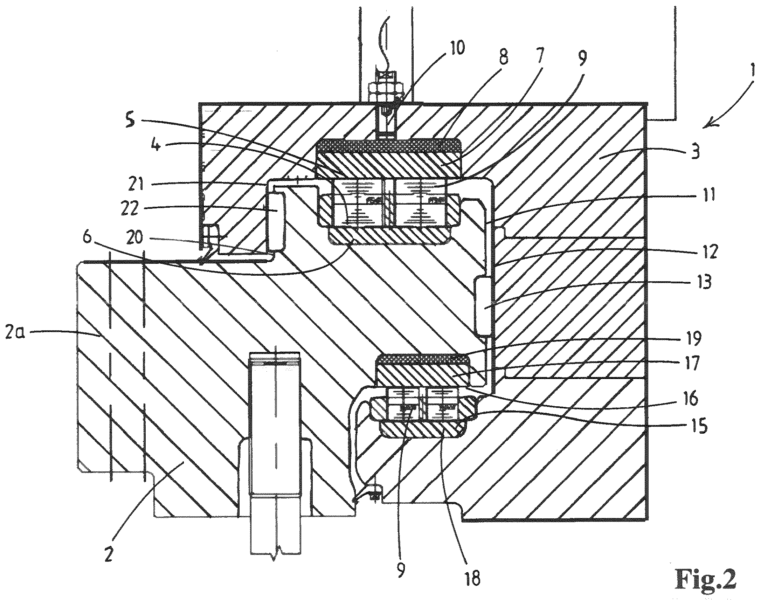

The slew bearing 1 is shown in more detail in figure 2.

A first stationary raceway surface 4 is oriented substantially perpendicular to the slew axis, which in figure 1 extends vertically as is common.

The first raceway stationary surface 4 is arranged opposite a first rotary raceway surface 5, parallel to the first stationary raceway surface 4.

The surface 4 is formed by a first stationary raceway member 6 and is contacted by rolling elements 9, e.g. rollers 9, e.g. cylindrical rollers 9, of the slew bearing.

The first rotary surface 5 is formed by a first rotary raceway member 7.

The rolling elements 9 are provided between the first stationary raceway member 6 and the first rotary raceway member 7.

The slew bearing 1 comprises a first elastically compressible resilient insert 8 which is sandwiched between the first rotary raceway member 7 and the rotary ring part 3, so that the rotary ring part 3 is resiliently supported on the rolling elements 9. In other embodiments the first insert 8 is sandwiched between the stationary ring part 2 and the first stationary raceway member 6, such that the rotary ring part 3 is resiliently supported on the rolling elements 9 via the resilient insert 8 and the first stationary raceway 6.

The resilient insert 8 may be made of a composite material, for example a fiber reinforced plastic material, for example Orkot (brand name).

The slew bearing 1 comprises an axial load sensor 10 provided in the rotary ring part 3 for monitoring an axial load on the slew bearing 1 by measuring a distance between the rotary ring part 3 and the first rotary raceway member 7 over the resilient insert 8. The distance is measured through the first insert 8 by the axial load sensor 10, e.g. by measuring a magnetic flux due to a change of position of the first rotary raceway member 7 relative to the load sensor 10 due to a compression of the insert 8. For example, the sensor 10 is embodied as an inductive proximity sensor.

In other embodiments, the load sensor 10 may be in mechanical contact with the first rotary raceway member 7 through the first insert 8 to measure the distance, e.g. the insert 8 having a corresponding hole through which the sensor 10 or part thereof extends.

In embodiments, the first insert 8 is sandwiched between the stationary ring part 2 and the first stationary raceway member 6, the load sensor 10 may be provided in the stationary ring part 2 to measure a distance between the stationary ring part 2 and the first stationary raceway member 6 over the first insert 8.

The slew bearing 1, as is preferred, comprises multiple axial load sensors 10 for monitoring an axial load on the slew bearing 1. The multiple axial load sensors 10 are distributed on a circumferential extension of the slew bearing 1 around the slew axis, e.g. more than 10 axial load sensors are provided in combination with a single raceway member of the slew bearing, e.g. more than 20 axial load sensors. This allows the load to be monitored around the circumferential extension, showing locations of peak load on the slew bearing 1, independent on the location of the peak load on the circumferential extension.

The axial load sensing may be done by either measuring a distance between the rotary ring part 3 and the first rotary raceway member 7 over the resilient insert 8 or by measuring a distance between the stationary ring part 2 and the first stationary raceway 6 over the resilient insert 8.

The slew bearing 1 shown in figure 1 further comprises an elastically compressible resilient slide ring 13, e.g. made from the same material as the first insert 8, which is mounted to a vertical surface 11 of the ring part 2. A rotary surface 12 of the ring part 3 slides along this slide ring 3 in order to support radially directed loads between the stationary ring part 2 and the rotary ring part 3.

The slew bearing 1 shown in figure 1 further comprises a second stationary surface 16 formed by a second stationary raceway member 17 which is oriented perpendicular to the slew axis.

A second rotary raceway member 18 forms a second rotary surface 15 which is provided on the rotary ring part 3.

Rolling elements 9, e.g. rollers 9, are provided between the second stationary raceway member 17 and the second rotary raceway member 18.

The slew bearing 1 as shown here, may also comprise a second elastically compressible resilient insert 19, e.g. manufactured from the same material as the first insert 8, which is sandwiched between the second stationary raceway member 17 and the stationary ring part 2.

One or, preferably, more second axial load sensors may be provided to measure distance between the second stationary raceway member 17 and the stationary ring part 2 across the insert 19.

The slew bearing 1 of figure 2 further comprises a stationary surface 20 on the stationary ring part 2 which is oriented parallel to the slew axis. The stationary surface 20 is arranged opposite a rotary surface 21 which is provided on the rotary ring part 3.

An elastically compressible second slide ring 22 is provided between surfaces 20, 21 in order to support radially directed loads between the rotary ring part 3 and the stationary ring part 2.

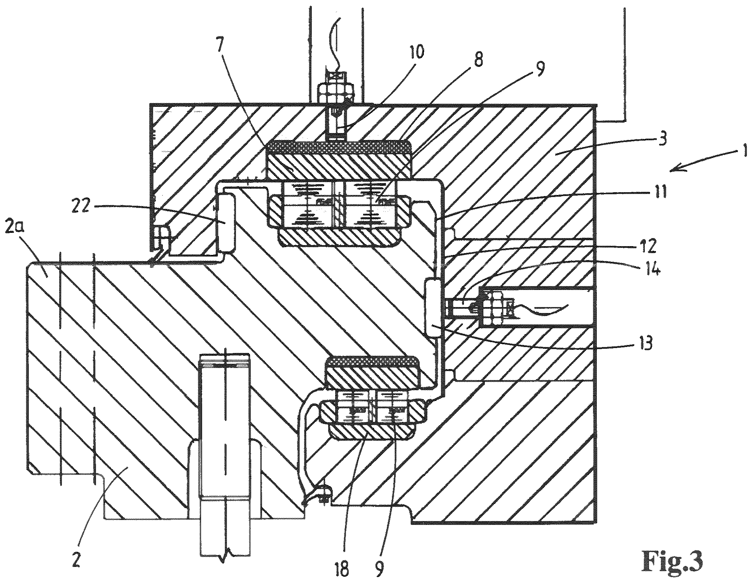

Figure 3 shows a different embodiment of the slew bearing 1 than figure 1, wherein like elements have the same reference numerals.

The slew bearing 1 shown in figure 3 further comprises one or more, preferably multiple, radial load sensors 14 for monitoring radial load on the slew bearing 1. The radial load is monitored by measuring a distance between the rotary ring part 3 and the stationary ring part 2 through the second insert 13. The distance is measured based on a measurement of a field, e.g. an electromagnetic field, a magnetic field, e.g. a magnetic flux, or a signal emitted by the load sensor and reflected towards the load sensor.

For example, the sensor 14 is an inductive proximity sensor.

In embodiments, the slew bearing 1 comprises multiple radial load sensors 14 for monitoring radial load on the slew bearing 1 by measuring a distance between the rotary ring part 3 and stationary ring part 2 through the slide ring 13, wherein the multiple radial load sensors 14 are distributed around the circumferential extension of the slew bearing 1 around the slew axis.

The slew bearings 1 shown in the figures may rotatably support a crane on a base. The base of the crane may be provided on a vessel such that the crane may be used for performing offshore activities such as hoisting an object.

For example the crane, e.g. provided on the vessel may be used in a method, comprising:
- hoisting an object with the crane mounted to the vessel;
- monitoring the radial load and/or the axial load on the slew bearing with the radial load sensor and the axial load sensor; and
- optionally, providing a warning signal when the axial load and/or the radial load exceeds a predetermined threshold value.

## Claims

1. Slew bearing (1) for rotatably supporting an object (100) on a base about a slew axis, e.g. supporting a crane or crane part on a base (150), wherein the slew bearing (1) comprises:
- a stationary ring part (2) connected or connectable to the base (150); and
- a rotary ring part (3) connected or connectable to the object (100), which is rotatable around the slew axis,
wherein the stationary ring part (2) is provided with a stationary raceway member (6) forming a stationary raceway surface (4) oriented substantially perpendicular to the slew axis, wherein the rotary ring part (3) is provided with a rotary raceway member (7) forming a rotary raceway surface (5),
wherein rolling elements (9), e.g. rollers, e.g. rolling elements (9) in cages, are provided between the stationary raceway surface (4) and the rotary raceway surface (5), e.g. wherein the stationary raceway surface (4) is parallel to the rotary raceway surface (5),
wherein the slew bearing (1) further comprises an elastically compressible resilient insert (8), e.g. containing a plastic material, which is sandwiched either between the rotary raceway member (7) and the rotary ring part (3), so that the rotary ring part (3) is resiliently supported on the rolling elements (9) via the rotary raceway member (7) and the resilient insert (8), or between the stationary ring part (2) and the stationary raceway member (6), so that the rotary ring part (3) is resiliently supported on the rolling elements (9) via the resilient insert (8) and the stationary raceway member (6),
**characterized in that**
the slew (1) bearing further comprises an axial load sensor (10) for monitoring an axial load on the slew bearing (1) by either measuring a distance between the rotary ring part (3) and the first rotary raceway member (7) over the resilient insert (8) or by measuring a distance between the stationary ring part (2) and the first stationary raceway member (6) over the resilient insert (8).

2. Slew bearing according to claim 1, wherein the axial load sensor (10) is configured to measure the distance based on a measurement of a field, e.g. an electromagnetic field, e.g. the axial load sensor (10) being an inductive proximity sensor.

3. Slew bearing according to claim 1 or 2, wherein for supporting radially directed loads between the rotary ring part (3) and the stationary ring part (2), the slew bearing (1) further comprises an elastically compressible resilient slide ring (13), e.g. containing a plastic material, mounted to either the rotary ring part (3) or the stationary ring part (2) and sliding along a second stationary surface (11) of the stationary ring part (2) or along a second rotary surface (12) of the rotary ring part (3),
wherein the slew bearing (1) further comprises a radial load sensor (14) for monitoring a radial load on the slew bearing (1) by measuring a distance between the rotary ring part (3) and stationary ring part (2) through the slide ring (13),
wherein the radial load sensor (14) is configured to measure the distance between the rotary ring part (3) and the stationary ring part (2) through the slide ring (13) based on a measurement of a field.

4. Slew bearing (1) for rotatably supporting an object (100) on a base (150) about a slew axis, e.g. supporting a crane or crane part on a base (150), wherein the slew bearing (1) comprises:
- a stationary ring part (2) connected or connectable to the base (150); and
- a rotary ring part (3) connected or connectable to the object (100), which is rotatable around the slew axis,
**characterized in that**
for supporting radially directed loads between the rotary ring part (3) and the stationary ring part (2), the slew bearing (1) comprises an elastically compressible resilient slide ring (13), e.g. containing a plastic material, mounted to either the rotary ring part (3) or the stationary ring part (2) and sliding along a stationary surface (20) of the stationary ring part (2) or along a rotary surface (21) of the rotary ring part (3),
wherein the slew bearing (1) further comprises a radial load sensor (14) for monitoring a radial load on the slew bearing (1) by measuring a distance between the rotary ring part (3) and stationary ring part (2) through the slide ring (13),
wherein the radial load sensor (14) is configured to measure the distance between the rotary ring part (3) and the stationary ring part (2) through the slide ring (13) based on a measurement of a field, e.g. an electromagnetic field.

5. Slew bearing according to any one of claims 1 - 3, wherein the resilient insert (8) is sandwiched between the rotary raceway member (7) and the rotary ring part (3), wherein the axial load sensor (10) is configured to measure a distance between the rotary ring part (3) and the rotary raceway member (7) over the resilient insert (8), and wherein the axial load sensor (10) is provided in the rotary ring part (3), adjacent to the resilient insert (8), and opposite the rotary raceway member (7) relative to the resilient insert (8).

6. Slew bearing according to claim 3 or 4, wherein the slide ring is (13) provided on the stationary ring part (2), and wherein the radial load sensor (14) is provided in the rotary ring part (3), adjacent to the slide ring (13).

7. Slew bearing wherein when dependent on claims 1-3 or 6 when dependent on claim 3 the axial load sensor (10) is configured to measure the distance by sending a signal through the resilient insert (8) and receiving a reflected signal,
and/or
when dependent on claims 3,4 or 5 when dependent on claim 3
wherein the radial load sensor (14) is configured to measure the distance by sending a signal through the slide ring (13) and receiving a reflected signal.

8. Slew bearing comprising when dependent on claims 1-3 or 6 when dependent on claim 3 multiple of said axial load sensors (10) for monitoring axial load distribution on the slew bearing (1) by each measuring a distance over the resilient insert (13), wherein the multiple axial load sensors (10) are distributed on a circumferential extension of the slew bearing (1) around the slew axis,
and/or
when dependent on claims 3,4 or 5 when dependent on claim 3
wherein the slew bearing (1) comprises multiple radial load sensors (14) for monitoring radial load distribution on the slew bearing (1) by measuring a distance through the slide ring (13), wherein the multiple radial load sensors (14) are distributed around the circumferential extension of the slew bearing (1) around the slew axis.

9. Slew bearing according to one or more of the preceding claims, wherein the stationary ring part (2) is provided with a second stationary raceway member (17) forming a second stationary raceway surface (16) that is oriented substantially perpendicular to the slew axis, and wherein the rotary ring part (3) is provided with a second rotary raceway member (18) forming a second rotary raceway surface (15),
wherein rolling elements (9), e.g. rollers, are provided between the second stationary raceway member (16) and the second rotary raceway member (16),
wherein the slew bearing (1) further comprises a second elastically compressible resilient insert (19), e.g. containing a plastic material, which is sandwiched between either the second rotary raceway member (18) and the rotary ring part (3), so that the rotary ring part (3) is resiliently supported on the rollers (9) via the second rotary raceway member(18) and the second resilient insert (19), or the stationary ring part (2) and the second stationary raceway member (15), so that the stationary ring part (2) is resiliently supported on the rollers (9) via the second resilient insert (19) and the second stationary raceway member (15).

10. Slew bearing according to one or more of the preceding claims, wherein for supporting radially directed loads between the rotary ring part (3) and the stationary ring part (2), the slew bearing (1) further comprises a second elastically compressible resilient slide ring (22), e.g. containing a plastic material, mounted to either the rotary ring part (3) or the stationary ring part (2) and sliding along a stationary surface (20) of the stationary ring part (2) or along a rotary surface (21) of the rotary ring part (3).

11. Crane rotatably supported on a base (150) by a slew bearing (1) according to one or more of the claims 1 - 10.

12. A backhoe dredger supported on a base (150) by a slew bearing (1) according to one or more of the claims 1 - 10.

13. Vessel provided with a crane according to claim 11 or a backhoe dredger according to claim 12.

14. Method for hoisting an object (100) with a crane, wherein use is made of a vessel according to claim 13 or a crane according to claim 11.

15. Method according to claim 14, comprising:
- hoisting an object (100) with the crane, e.g. mounted to the vessel;
- monitoring the radial load and/or the axial load on the slew bearing (1) with the radial load sensor (10) and the axial load sensor (14); and
- optionally, providing a warning signal when the axial load and/or the radial load exceeds a predetermined threshold value.

## Patentansprüche

1. Drehkranzlager (1) zum drehbaren Tragen eines Objekts (100) auf einer Basis um eine Drehachse, z. B. zum Tragen eines Krans oder eines Kranteils auf einer Basis (150), wobei das Drehkranzlager (1) umfasst:
- einen stationären Ringteil (2), der mit der Basis (150) verbunden oder verbindbar ist; und
- einen rotierenden Ringteil (3), der mit dem Objekt (100) verbunden oder verbindbar ist und um die Drehachse drehbar ist,
wobei der stationäre Ringteil (2) mit einem stationären Laufbahnelement (6) versehen ist, das eine stationäre Laufbahnfläche (4) bildet, die im Wesentlichen senkrecht zur Drehachse ausgerichtet ist,
wobei der rotierende Ringteil (3) mit einem rotierenden Laufbahnelement (7) versehen ist, das eine rotierende Laufbahnfläche (5) bildet,
wobei Wälzkörper (9), z. B. Rollen, z. B. Wälzkörper (9) in Käfigen, zwischen der stationären Laufbahnfläche (4) und der rotierenden Laufbahnfläche (5) vorgesehen sind, z. B. wobei die stationäre Laufbahnfläche (4) parallel zur rotierenden Laufbahnfläche (5) ist,
wobei das Drehkranzlager (1) ferner ein elastisch komprimierbares federndes Einsatzteil (8), z. B. ein Kunststoffmaterial enthaltend, umfasst, das entweder zwischen dem rotierenden Laufbahnelement (7) und dem rotierenden Ringteil (3) angeordnet ist, sodass der rotierende Ringteil (3) über das rotierende Laufbahnelement (7) und das federnde Einsatzteil (8) elastisch auf den Wälzkörpern (9) abgestützt ist, oder zwischen dem stationären Ringteil (2) und dem stationären Laufbahnelement (6) angeordnet ist, sodass der rotierende Ringteil (3) über das federnde Einsatzteil (8) und das stationäre Laufbahnelement (6) federnd auf den Wälzkörpern (9) abgestützt ist,
**dadurch gekennzeichnet, dass**
das Drehkranzlager (1) ferner einen Axiallastsensor (10) zum Überwachen einer Axiallast auf dem Drehkranzlager (1) umfasst, indem entweder ein Abstand zwischen dem rotierenden Ringteil (3) und dem ersten rotierenden Laufbahnelement (7) über das federnde Einsatzteil (8) gemessen wird oder ein Abstand zwischen dem stationären Ringteil (2) und dem ersten stationären Laufbahnelement (6) über das federnde Einsatzteil (8) gemessen wird.

2. Drehkranzlager nach Anspruch 1, wobei der Axiallastsensor (10) dazu ausgelegt ist, den Abstand basierend auf einer Messung eines Feldes zu messen, z. B. eines elektromagnetischen Feldes, z. B. wobei der Axiallastsensor (10) ein induktiver Näherungssensor ist.

3. Drehkranzlager nach Anspruch 1 oder 2, wobei zum Abstützen radial gerichteter Lasten zwischen dem rotierenden Ringteil (3) und dem stationären Ringteil (2) das Drehkranzlager (1) ferner einen elastisch komprimierbaren federnden Gleitring (13), z. B. ein Kunststoffmaterial enthaltend, umfasst, der entweder am rotierenden Ringteil (3) oder am stationären Ringteil (2) montiert ist und entlang einer zweiten stationären Oberfläche (11) des stationären Ringteils (2) oder entlang einer zweiten rotierenden Oberfläche (12) des rotierenden Ringteils (3) gleitet,
wobei das Drehkranzlager (1) ferner einen Radiallastsensor (14) zum Überwachen einer Radiallast auf dem Drehkranzlager (1) umfasst, indem ein Abstand zwischen dem rotierenden Ringteil (3) und dem stationären Ringteil (2) durch den Gleitring (13) gemessen wird,
wobei der Radiallastsensor (14) dazu ausgelegt ist, den Abstand zwischen dem rotierenden Ringteil (3) und dem stationären Ringteil (2) durch den Gleitring (13) basierend auf einer Messung eines Feldes zu messen.

4. Drehkranzlager (1) zum drehbaren Tragen eines Objekts (100) auf einer Basis (150) um eine Drehachse, z. B. zum Tragen eines Krans oder eines Kranteils auf einer Basis (150), wobei das Drehkranzlager (1) umfasst:
- einen stationären Ringteil (2), der mit der Basis (150) verbunden oder verbindbar ist; und
- einen rotierenden Ringteil (3), der mit dem Objekt (100) verbunden oder verbindbar ist und um die Drehachse drehbar ist,
**dadurch gekennzeichnet, dass** zum Abstützen radial gerichteter Lasten zwischen dem rotierenden Ringteil (3) und dem stationären Ringteil (2) das Drehkranzlager (1) einen elastisch komprimierbaren federnden Gleitring (13), z. B. ein Kunststoffmaterial enthaltend, umfasst, der entweder am rotierenden Ringteil (3) oder am stationären Ringteil (2) montiert ist und entlang einer stationären Oberfläche (20) des stationären Ringteils (2) oder entlang einer rotierenden Oberfläche (21) des rotierenden Ringteils (3) gleitet,
wobei das Drehkranzlager (1) ferner einen Radiallastsensor (14) zum Überwachen einer Radiallast auf dem Drehkranzlager (1) umfasst, indem ein Abstand zwischen dem rotierenden Ringteil (3) und dem stationären Ringteil (2) durch den Gleitring (13) gemessen wird,
wobei der Radiallastsensor (14) dazu ausgelegt ist, den Abstand zwischen dem rotierenden Ringteil (3) und dem stationären Ringteil (2) durch den Gleitring (13) basierend auf einer Messung eines Feldes, z. B. eines elektromagnetischen Feldes, zu messen.

5. Drehkranzlager nach einem der Ansprüche 1-3, wobei das federnde Einsatzteil (8) zwischen dem rotierenden Laufbahnelement (7) und dem rotierenden Ringteil (3) angeordnet ist, wobei der Axiallastsensor (10) dazu ausgelegt ist, einen Abstand zwischen dem rotierenden Ringteil (3) und dem rotierenden Laufbahnelement (7) über das federnde Einsatzteil (8) zu messen, und wobei der Axiallastsensor (10) im rotierenden Ringteil (3) angrenzend an das federnde Einsatzteil (8) und dem rotierenden Laufbahnelement (7) gegenüberliegend, relativ zu dem federnden Einsatzteil (8), angeordnet ist.

6. Drehkranzlager nach Anspruch 3 oder 4, wobei der Gleitring (13) am stationären Ringteil (2) vorgesehen ist, und wobei der Radiallastsensor (14) im rotierenden Ringteil (3), angrenzend an den Gleitring (13), vorgesehen ist.

7. Drehkranzlager, wobei bei Abhängigkeit von den Ansprüchen 1-3 oder 6 bei Abhängigkeit von Anspruch 3 der Axiallastsensor (10) dazu ausgelegt ist, den Abstand zu messen, indem ein Signal durch das federnde Einsatzteil (8) gesendet und ein reflektiertes Signal empfangen wird,
und/oder
bei Abhängigkeit von den Ansprüchen 3, 4 oder 5 bei Abhängigkeit von Anspruch 3, wobei der Radiallastsensor (14) dazu ausgelegt ist, den Abstand zu messen, indem ein Signal durch den Gleitring (13) gesendet und ein reflektiertes Signal empfangen wird.

8. Drehkranzlager, umfassend bei Abhängigkeit von den Ansprüchen 1-3 oder 6 bei Abhängigkeit von Anspruch 3 mehrere Axiallastsensoren (10) zum Überwachen der Axiallastverteilung auf dem Drehkranzlager (1), indem jeweils ein Abstand über das federnde Einsatzteil (13) gemessen wird, wobei die mehreren Axiallastsensoren (10) über eine Umfangserstreckung des Drehkranzlagers (1) um die Drehachse verteilt sind,
und/oder
bei Abhängigkeit von den Ansprüchen 3, 4 oder 5 bei Abhängigkeit von Anspruch 3, wobei das Drehkranzlager (1) mehrere Radiallastsensoren (14) zum Überwachen der Radiallastverteilung auf dem Drehkranzlager (1) umfasst, indem ein Abstand durch den Gleitring (13) gemessen wird, wobei die mehreren Radiallastsensoren (14) um eine Umfangserstreckung des Drehkranzlagers (1) um die Drehachse verteilt sind.

9. Drehkranzlager nach einem oder mehreren der vorhergehenden Ansprüche, wobei der stationäre Ringteil (2) mit einem zweiten stationären Laufbahnelement (17) versehen ist, das eine zweite stationäre Laufbahnfläche (16) bildet, die im Wesentlichen senkrecht zur Drehachse ausgerichtet ist, und wobei der rotierende Ringteil (3) mit einem zweiten rotierenden Laufbahnelement (18) versehen ist, das eine zweite rotierende Laufbahnfläche (15) bildet,
wobei Wälzkörper (9), z. B. Rollen, zwischen dem zweiten stationären Laufbahnelement (16) und dem zweiten rotierenden Laufbahnelement (16) vorgesehen sind,
wobei das Drehkranzlager (1) ferner ein zweites elastisch komprimierbares federndes Einsatzteil (19), z. B. ein Kunststoffmaterial enthaltend, umfasst, das entweder zwischen dem zweiten rotierenden Laufbahnelement (18) und dem rotierenden Ringteil (3) angeordnet ist, sodass der rotierende Ringteil (3) über das zweite rotierende Laufbahnelement (18) und das zweite federnde Einsatzteil (19) federnd auf den Wälzkörpern (9) abgestützt ist, oder zwischen dem stationären Ringteil (2) und dem zweiten stationären Laufbahnelement (15) angeordnet ist, sodass der stationäre Ringteil (2) über das zweite federnde Einsatzteil (19) und das zweite stationäre Laufbahnelement (15) federnd auf den Wälzkörpern (9) abgestützt ist.

10. Drehkranzlager nach einem oder mehreren der vorhergehenden Ansprüche, wobei zum Abstützen radial gerichteter Lasten zwischen dem rotierenden Ringteil (3) und dem stationären Ringteil (2) das Drehkranzlager (1) ferner einen zweiten elastisch komprimierbaren federnden Gleitring (22), z. B. ein Kunststoffmaterial enthaltend, umfasst, der entweder am rotierenden Ringteil (3) oder am stationären Ringteil (2) montiert ist und entlang einer stationären Oberfläche (20) des stationären Ringteils (2) oder entlang einer rotierenden Oberfläche (21) des rotierenden Ringteils (3) gleitet.

11. Kran, der drehbar auf einer Basis (150) mittels eines Drehkranzlagers (1) nach einem oder mehreren der Ansprüche 1-10 abgestützt ist.

12. Bagger, der auf einer Basis (150) mittels eines Drehkranzlagers (1) nach einem oder mehreren der Ansprüche 1-10 abgestützt ist.

13. Schiff, versehen mit einem Kran nach Anspruch 11 oder einem Bagger nach Anspruch 12.

14. Verfahren zum Heben eines Objekts (100) mit einem Kran, wobei ein Schiff nach Anspruch 13 oder ein Kran nach Anspruch 11 verwendet wird.

15. Verfahren nach Anspruch 14, umfassend:
- Heben eines Objekts (100) mit dem Kran, z. B. auf dem Schiff montiert;
- Überwachen der Radiallast und/oder der Axiallast auf dem Drehkranzlager (1) mit dem Radiallastsensor (14) und dem Axiallastsensor (10); und
- optional Bereitstellen eines Warnsignals, wenn die Axiallast und/oder die Radiallast einen vorbestimmten Schwellenwert überschreitet.

## Revendications

1. Roulement d'orientation (1) pour supporter en rotation un objet (100) sur une base autour d'un axe de pivotement, par exemple pour supporter une grue ou une partie de grue sur une base (150), le roulement d'orientation (1) comprenant :
- une partie annulaire fixe (2) raccordée ou raccordable à la base (150) ; et
- une partie annulaire rotative (3) raccordée ou raccordable à l'objet (100), qui est mobile en rotation autour de l'axe de pivotement,
la partie annulaire fixe (2) étant munie d'un élément de chemin de roulement fixe (6) formant une surface de roulement fixe (4) orientée sensiblement perpendiculairement à l'axe de pivotement,
la partie annulaire rotative (3) étant munie d'un élément de chemin de roulement rotatif (7) formant une surface de roulement rotative (5),
des éléments roulants (9), par exemple des rouleaux, par exemple des éléments roulants (9) en cages, étant prévus entre la surface de roulement fixe (4) et la surface de roulement rotative (5), la surface de roulement fixe (4) étant par exemple parallèle à la surface de roulement rotative (5),
le roulement d'orientation (1) comprenant en outre un insert élastique élastiquement compressible (8), contenant par exemple une matière plastique, qui est pris en sandwich soit entre l'élément de chemin de roulement rotatif (7) et la partie annulaire rotative (3), de sorte que la partie annulaire rotative (3) soit supportée de manière élastique sur les éléments roulants (9) par l'intermédiaire de l'élément de chemin de roulement rotatif (7) et de l'insert élastique (8), soit entre la partie annulaire fixe (2) et l'élément de chemin de roulement fixe (6), de sorte que la partie annulaire rotative (3) soit supportée de manière élastique sur les éléments roulants (9) par l'intermédiaire de l'insert élastique (8) et de l'élément de chemin de roulement fixe (6),
**caractérisé en ce que**
le roulement d'orientation (1) comprend en outre un capteur de charge axiale (10) pour surveiller une charge axiale sur le roulement d'orientation (1), soit en mesurant une distance entre la partie annulaire rotative (3) et le premier élément de chemin de roulement rotatif (7) sur l'insert élastique (8), soit en mesurant une distance entre la partie annulaire fixe (2) et le premier élément de chemin de roulement fixe (6) sur l'insert élastique (8).

2. Roulement d'orientation selon la revendication 1, dans lequel le capteur de charge axiale (10) est configuré pour mesurer la distance sur la base d'une mesure d'un champ, par exemple un champ électromagnétique, le capteur de charge axiale (10) étant par exemple un capteur de proximité inductif.

3. Roulement d'orientation selon la revendication 1 ou 2, dans lequel pour supporter des charges dirigées radialement entre la partie annulaire rotative (3) et la partie annulaire fixe (2), le roulement d'orientation (1) comprend en outre une bague coulissante élastique élastiquement compressible (13), contenant par exemple une matière plastique, montée soit sur la partie annulaire rotative (3), soit sur la partie annulaire fixe (2), et coulissant le long d'une deuxième surface fixe (11) de la partie annulaire fixe (2) ou le long d'une deuxième surface rotative (12) de la partie annulaire rotative (3),
le roulement d'orientation (1) comprenant en outre un capteur de charge radiale (14) pour surveiller une charge radiale sur le roulement d'orientation (1) en mesurant une distance entre la partie annulaire rotative (3) et la partie annulaire fixe (2) à travers la bague coulissante (13),
le capteur de charge radiale (14) étant configuré pour mesurer la distance entre la partie annulaire rotative (3) et la partie annulaire fixe (2) à travers la bague coulissante (13) sur la base d'une mesure d'un champ.

4. Roulement d'orientation (1) pour supporter en rotation un objet (100) sur une base (150) autour d'un axe de pivotement, par exemple pour supporter une grue ou une partie de grue sur une base (150), le roulement d'orientation (1) comprenant :
- une partie annulaire fixe (2) raccordée ou raccordable à la base (150) ; et
- une partie annulaire rotative (3) raccordée ou raccordable à l'objet (100), qui est mobile en rotation autour de l'axe de pivotement,
**caractérisé en ce que**, pour supporter des charges dirigées radialement entre la partie annulaire rotative (3) et la partie annulaire fixe (2), le roulement d'orientation (1) comprend une bague coulissante élastique élastiquement compressible (13), contenant par exemple une matière plastique, montée soit sur la partie annulaire rotative (3), soit sur la partie annulaire fixe (2), et coulissant le long d'une surface fixe (20) de la partie annulaire fixe (2) ou le long d'une surface rotative (21) de la partie annulaire rotative (3),
le roulement d'orientation (1) comprenant en outre un capteur de charge radiale (14) pour surveiller une charge radiale sur le roulement d'orientation (1) en mesurant une distance entre la partie annulaire rotative (3) et la partie annulaire fixe (2) à travers la bague coulissante (13),
le capteur de charge radiale (14) étant configuré pour mesurer la distance entre la partie annulaire rotative (3) et la partie annulaire fixe (2) à travers la bague coulissante (13) sur la base d'une mesure d'un champ, par exemple un champ électromagnétique.

5. Roulement d'orientation selon l'une quelconque des revendications 1 à 3, dans lequel l'insert élastique (8) est pris en sandwich entre l'élément de chemin de roulement rotatif (7) et la partie annulaire rotative (3), le capteur de charge axiale (10) étant configuré pour mesurer une distance entre la partie annulaire rotative (3) et l'élément de chemin de roulement rotatif (7) sur l'insert élastique (8), et le capteur de charge axiale (10) étant prévu dans la partie annulaire rotative (3), à côté de l'insert élastique (8), et à l'opposé de l'élément de chemin de roulement rotatif (7) par rapport à l'insert élastique (8).

6. Roulement d'orientation selon la revendication 3 ou 4, dans lequel la bague coulissante (13) est prévue sur la partie annulaire fixe (2), et dans lequel le capteur de charge radiale (14) est prévu dans la partie annulaire rotative (3), à côté de la bague coulissante (13).

7. Roulement d'orientation dans lequel, lorsqu'il dépend des revendications 1 à 3 ou 6 lorsque celle-ci dépend de la revendication 3, le capteur de charge axiale (10) est configuré pour mesurer la distance en envoyant un signal à travers l'insert élastique (8) et en recevant un signal réfléchi,
et/ou
lorsqu'il dépend des revendications 3, 4 ou 5 lorsque cell-ci dépend de la revendication 3, le capteur de charge radiale (14) est configuré pour mesurer la distance en envoyant un signal à travers la bague coulissante (13) et en recevant un signal réfléchi.

8. Roulement d'orientation comprenant, lorsqu'il dépendent des revendications 1 à 3 ou 6 lorsque celle-ci dépend de la revendication 3, plusieurs desdits capteurs de charge axiale (10) pour surveiller la répartition axiale des charges sur le roulement d'orientation (1) en mesurant chacun une distance sur l'insert élastique (13), les multiples de capteurs de charge axiale (10) étant répartis sur une étendue circonférentielle du roulement d'orientation (1) autour de l'axe de pivotement,
et/ou
lorsqu'il dépend des revendications 3, 4 ou 5 lorsque celle-ci dépend de la revendication 3, le roulement d'orientation (1) comprend plusieurs capteurs de charge radiale (14) pour surveiller la répartition radiale des charges sur le roulement d'orientation (1) en mesurant une distance à travers la bague coulissante (13), les multiples capteurs de charge radiale (14) étant répartis autour de l'étendue circonférentielle du roulement d'orientation (1) autour de l'axe de pivotement.

9. Roulement de pivotement selon l'une ou plusieurs des revendications précédentes, dans lequel la partie annulaire fixe (2) est munie d'un deuxième élément de chemin de roulement fixe (17) formant une deuxième surface de roulement fixe (16) orientée sensiblement perpendiculairement à l'axe de pivotement, et dans lequel la partie annulaire rotative (3) est munie d'un deuxième élément de chemin de roulement rotatif (18) formant une deuxième surface de roulement rotative (15),
des éléments roulants (9), par exemple des rouleaux, étant prévus entre le second élément de chemin de roulement fixe (16) et le deuxième élément de chemin de roulement rotatif (16),
le roulement d'orientation (1) comprenant en outre un deuxième insert élastique élastiquement compressible (19), contenant par exemple une matière plastique, qui est pris en sandwich entre le deuxième élément de chemin de roulement rotatif (18) et la partie annulaire rotative (3), de sorte que la partie annulaire rotative (3) soit supportée élastiquement sur les rouleaux (9) par l'intermédiaire du deuxième élément de chemin de roulement rotative (18) et le deuxième insert élastique (19), ou la partie annulaire fixe (2) et le deuxième élément de chemin de roulement fixe (15), de sorte que la partie annulaire fixe (2) soit supportée élastiquement sur les rouleaux (9) par l'intermédiaire du deuxième insert élastique (19) et du deuxième élément de chemin de roulement fixe (15).

10. Roulement d'orientation selon l'une ou plusieurs des revendications précédentes, dans lequel, pour supporter des charges dirigées radialement entre la partie annulaire rotative (3) et la partie annulaire fixe (2), le roulement d'orientation (1) comprend en outre une deuxième bague coulissante élastique élastiquement compressible (22), contenant par exemple une matière plastique, montée soit sur la partie annulaire rotative (3), soit sur la partie annulaire fixe (2), et glissant le long d'une surface fixe (20) de la partie annulaire fixe (2) ou le long d'une surface rotative (21) de la partie annulaire rotative (3).

11. Grue supportée en rotation sur une base (150) par un roulement d'orientation (1) selon l'une ou plusieurs des revendications 1 à 10.

12. Drague de pelle rétrocaveuse supportée sur une base (150) par un roulement d'orientation (1) selon l'une ou plusieurs des revendications 1 à 10.

13. Navire muni d'une grue selon la revendication 11 ou d'une drague de pelle rétrocaveuse selon la revendication 12.

14. Procédé pour hisser un objet (100) avec une grue, dans lequel on utilise un navire selon la revendication 13 ou une grue selon la revendication 11.

15. Procédé selon la revendication 14, comprenant :
- le hissage d'un objet (100) avec la grue, par exemple montée sur le navire ;
- la surveillance de la charge radiale et/ou de la charge axiale sur le roulement d'orientation (1) au moyen du capteur de charge radiale (10) et du capteur de charge axiale (14) ; et
- facultativement, l'émission d'un signal d'alerte lorsque la charge axiale et/ou la charge radiale dépasse une valeur seuil prédéterminée.
